# EUROPEAN PATENT SPECIFICATION

(11) **EP 3 170 079 B1**
(45) Date of publication and mention of the grant of the patent: **23.05.2018**
(21) Application number: 15744795.4
(22) Date of filing: 14.07.2015
(51) Int. Cl.: G06F 9/50, H04L 29/08, H04L 12/26, H04L 12/911

(54) **PROCESSING CHANGES IN A MULTI-TENANT SYSTEM**
VERARBEITUNG VON ÄNDERUNGEN IN EINEM MANDANTENFÄHIGEN SYSTEM
TRAITEMENT DE CHANGEMENTS AFFECTANT UN SYSTÈME MULTI-LOCATAIRE

(30) Priority: 17.07.2014 US 201414334307
(43) Date of publication of application: 24.05.2017
(73) Proprietor: Microsoft Technology Licensing, LLC, Redmond, WA 98052-6399 (US)
(72) Inventor: GAURAV, Suraj, Redmond Washington 98052-6399 (US); GOIS, Marcus Vinicius Silva, Redmond Washington 98052-6399 (US); COBURN, Mark, Redmond Washington 98052-6399 (US); PATTABIRAMAN, Swaminathan, Redmond Washington 98052-6399 (US); BANSAL, Vipul, Redmond Washington 98052-6399 (US)
(74) Representative: Grünecker Patent- und Rechtsanwälte PartG mbB
(86) International application number: PCT/US2015/040234
(87) International publication number: WO 2016/010936

(56) References cited:
- US-A1- 2011 246 434
- US-A1- 2011 258 630
- US-A1- 2011 264 704
- US-A1- 2014 053 160
- US-A1- 2014 109 102
- US-A1- 2014 181 828
- US-B1- 8 443 366
- US-B1- 8 473 469

## Description

### BACKGROUND

Computer systems are currently in wide use. Some computer systems are local computer systems, while others are used in a remote server environment.

It is not uncommon for a company or another organization to switch between a local (on-premise) implementation of a computer system to a remote server implementation (such as a cloud-based implementation) of the computer system. By way of example, companies sometimes switch between a local implementation and a remote server implementation of their electronic mail systems, their document management systems, or their business systems. Some examples of business systems include enterprise resource planning (ERP) systems, customer relations management (CRM) systems, line-of-business (LOB) systems, among others. These are only some examples of the types of computer systems where companies switch between a local, on-premise, implementation to a remote server or cloud-based implementation.

Similarly, some organizations have a hybrid implementation. Some of the services are performed by local, on-premise, components of the computer system, while other services are performed in the remote server or cloud-based environment. In hybrid systems, it is not uncommon for the organization to migrate certain services from the on-premise implementation to the cloud-based implementation.

Some companies that have remote server or cloud-based implementations are relatively large. Enterprise organizations, for example, may have many thousands of employees. Thus, the remote server or cloud-based implementation of their computer system must serve a large number of individuals. Many of the transactions or changes made to the computer system involve making changes to a large number of user accounts or to a large amount of user data.

By way of example, when an enterprise organization wishes to migrate some computing system functionality from an on-premise implementation to a cloud-based implementation, this can involve many different updates to the computer system for the enterprise. By way of example, if the enterprise is migrating its electronic mail system, this can involve the creation of a large number of employee accounts. Account creation is often done in a serialized manner, which can take a large amount of time. In addition, where some changes are made, those changes can consume a large amount of the processing and memory overhead of the remote server or cloud-based implementation, as well as the bandwidth.

Many cloud-based or remote server implementations are also multi-tenant systems. That is, they provide some level of service for multiple different tenants, who are often multiple different organizations. When one tenant makes a large number of changes, this can negatively affect the performance experienced by the other tenants.

The discussion above is merely provided for general background information and is not intended to be used as an aid in determining the scope of the claimed subject matter.

US Patent Application Publication US 2011/0264704 A1 (Mehra) discloses a multitenant database system (MTS) that allows for bulk delete and splits a delete job into multiple batch jobs (cf. paragraphs [0020] and [0027]). Multiple operations that result from breaking down the delete request can be scheduled separately in accordance with the proportional scheduling for the tenant they belong to (cf. paragraph [0072]).

US Patent US 8,443,366 B1 (Yancey) discloses that computational jobs are partitioned into a plurality of individual tasks, each having a unique thread of operation. A utilization monitor monitors resource utilization levels and it is determined whether to increase or decrease the number of threads acting against the architecture (cf. column 5, lines 55 to column 6, line 8, and column 8, lines 55 to 60). The partitions are defined by the tenant or the users (cf. column 8, lines 65 to 66).

### SUMMARY

Tenant changes are received at a multi-tenant service. The tenant changes are divided into sections. The sections of tenant changes are processed at the multi-tenant service, across all tenants that have requested changes, to evenly distribute processing resources across all requesting tenants.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. The claimed subject matter is not limited to implementations that solve any or all disadvantages noted in the background.

### BRIEF DESCRIPTION OF THE DRAWINGS

Figure 1 is a block diagram of one example of a cloud-based multi-tenant service architecture.
Figure 2 is a block diagram showing one example of a change scheduling component in more detail.
Figures 3A and 3B (collectively Figure 3) show a flow diagram illustrating one example of the operation of the architecture shown in Figure 1.
Figure 4 is a block diagram illustrating different levels of multi-tenancy in one example of a multi-tenant cloud architecture.
Figures 5-7 show examples of mobile devices.
Figure 8 is a block diagram of one example of a computing environment.

### DETAILED DESCRIPTION

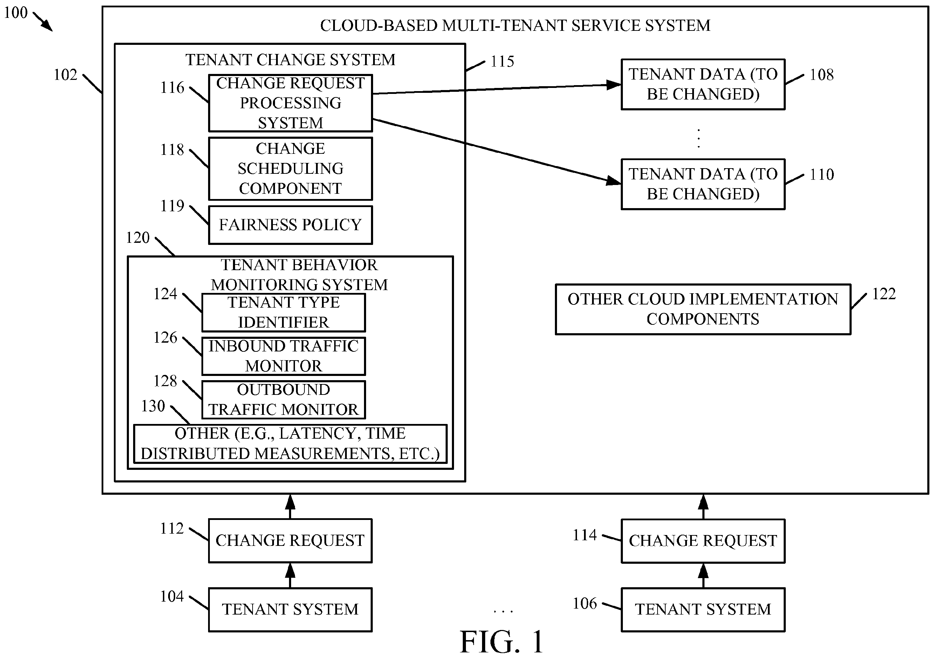

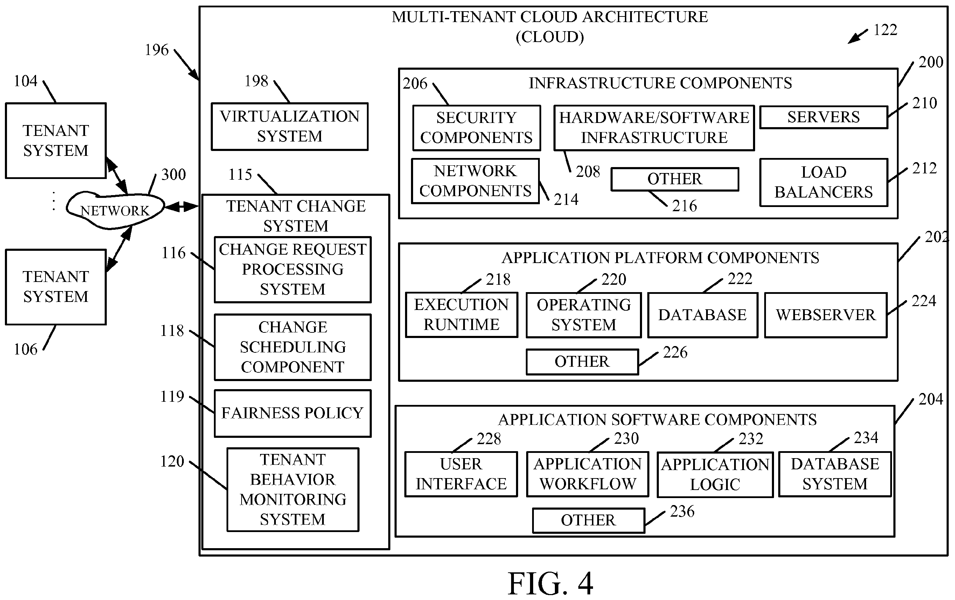

Figure 1 is a block diagram of one example of a cloud-based multi-tenant service architecture 100. Architecture 100 includes cloud-based multi-tenant service system 102 that is accessible by a plurality of different tenant systems 104-106. As is described in greater detail below with respect to Figure 4, cloud-based multi-tenant service system 102 provides some level of multi-tenant services to tenants that use tenant systems 104-106. The tenants are illustratively separate organizations so that the multi-tenant services provided by system 102 are separated or isolated, per tenant, at the desired level. Also, as is described in greater detail below with respect to Figure 4, the multi-tenant services can be provided at the infrastructure level, at the application platform level, or at the application software level, among others. Thus, depending on the particular level of multi-tenancy that is provided by system 102, the information corresponding to a particular client (or tenant) will be separated at that level, and isolated so it cannot be accessed by other clients (or tenants).

By way of example, if system 102 provides infrastructure as a service, then the infrastructure components of system 102 are shared by tenants 104-106, but their information is otherwise kept separate. If system 102 provides a platform as a service, then the platform components are shared by tenants 104-106. If system 102 provides application software as a service, then a common application is run by system 102, to service tenants 104-106. In any of these implementations, because system 102 provides some level of multi-tenancy, the information corresponding to the different tenants 104-106 is kept separate. This is described in greater detail below with respect to Figure 4.

In the example of system 102, shown in Figure 1, tenant systems 104-106 access applications that operate on their corresponding tenant data 108-110. Tenant system 104-106 may provide change requests 112-114 to change their corresponding tenant data 108-110. By way of example, tenant 104 may be migrating a number of users from an on-premise system to the cloud-based system 102. Therefore, the change requests 112 may be to add a large number of e-mail accounts in the on-premise system 102, for tenant system 104. In another example, tenant system 106 may have acquired another organization and therefore may need to add a large number of electronic mail accounts to its cloud-based implementation in system 102. In yet another example, the organization that uses tenant system 104 may have reorganized. Therefore, it may need to change a large number of employee records to show that they are no longer part of the human resources department, but are now part of the marketing department. In any of these examples, or a wide variety of other examples, the changes to the cloud-based implementation for the tenants may be relatively large in number. However, in one example, system 102 processes these changes in a way that will not affect the performance of system 102 in servicing the other tenants.

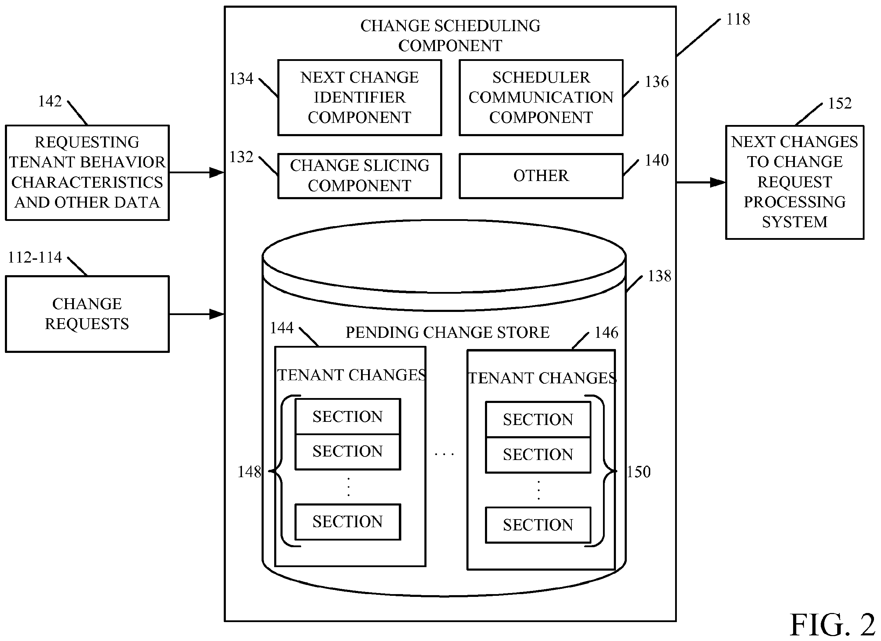

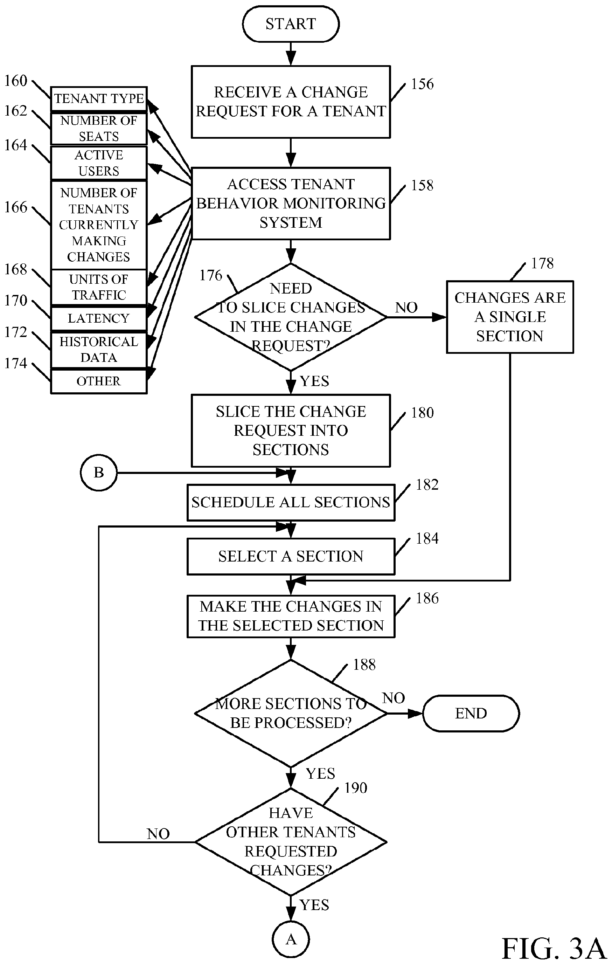

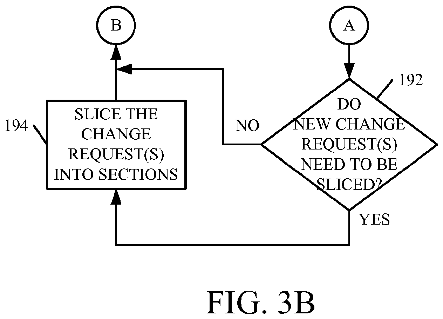

A more detailed description of the operation of system 102 in making tenant updates or changes is provided below with respect to Figures 2 and 3. A brief overview will now be provided to enhance understanding.

System 102 illustratively includes change request processing system 116, change scheduling component 118, tenant behavior monitoring system 120, and other cloud implementation components 122. It can also include fairness policy 119. Change scheduling component 118 (which is shown in more detail in Figure 2) receives the change requests from tenant systems 104-106 and accesses tenant behavior monitoring system 120 which provides information that is used by change scheduling component 118 to schedule the change requests. In one example, change scheduling component 118 divides the change requests received from the various tenant systems 104-106 into sections and distributes the resources of change request processing system 116 across the various tenants so that a single tenant who may be submitting a relatively large number of change requests does not overwhelm those resources to the detriment of other tenants.

In scheduling the changes, component 118 accesses information provided by tenant behavior system 120. Tenant behavior system 120, itself, illustratively includes tenant type identifier 124, inbound traffic monitor 126, outbound traffic monitor 128, and other identifier components 130. The tenant type identifier 124 can identify different characteristics of the requesting tenant 104. For instance, it can determine whether the tenant is a tenant that is paying for the cloud-based service or one that has a trial account. It can identify the size of the tenant (such as the number of seats and the active users) and it can also consider the current traffic level or load on change request processing system 116, by monitoring the inbound and outbound traffic. It can calculate the latency currently observed by the various tenants 104-106 (such as by measuring the time between a change request and the change actually being made), it can analyze historical traffic data, and a wide variety of other data. In any case, change scheduling component 118 illustratively controls the changes that are submitted to change request processing system 116 so that the behavior of any set of tenants does not overwhelm the system or otherwise significantly degrade the performance experienced by other tenants.

Figure 2 is a block diagram of one example of change scheduling component 118 in more detail. Component 118 illustratively includes change slicing component 132, next change identifier component 134, scheduler communication component 136, and pending change store 138. It can include other items 140 as well. Component 118 illustratively receives change requests 112-114 from the various tenant systems 104-106. It also receives requesting tenant behavior characteristics 142 from tenant behavior monitoring system 120. Change slicing component 132 then divides the requested changes, per tenant and saves them as tenant changes 144-146 in pending change store 138. Based upon the number of changes currently being requested (and other information), change slicing component 132 can slice the changes 144-146 into a plurality of different sections 148-150, for each of the tenants. Each section may have the same number of changes and the number may be predefined or dynamically determined. Next change identifier component 134 identifies which of the sections 148-150 is the next one that should be processed in order to ensure that the various tenant systems 104-106 are seeing an acceptable performance. It indicates this to scheduler communication component 136 which then sends the next changes 152 to the change request processing system 116. By dividing up the change request for each tenant into common sized sections, and then by scheduling those sections of changes to be made by change request processing system 116, change scheduling component 118 can control the performance level (e.g., the latency) observed by each of the tenant systems 104-106 in having their requested changes made. Component 118 can do this according to a predefined fairness policy 119 or otherwise. Thus, component 118 can ensure that no single tenant or group of tenants overwhelms the change request processing system 116, to the great detriment of other tenants. Instead, it can schedule changes according to the fairness policy 119 that can be set by an administrator or other personnel, or determined in other ways.

Figures 3A and 3B (collectively Figure 3) show a flow diagram illustrating one example of the operation of change scheduling component 118, and the other components of cloud-based multi-tenant service system 102, in making tenant changes. System 102 first receives a change request for a tenant. This is indicated by block 156 in Figure 3. The change request will illustratively include a tenant identifier that identifies the tenant system 104-106 that is making the changes, along with a set of requested changes to the corresponding tenant data.

Once a change request is received, change slicing component 132 in change scheduling component 118 accesses tenant behavior monitoring system 120 to obtain requesting tenant behavior characteristics and other data 142. This is indicated by block 158. As briefly discussed above, those characteristics can include the tenant type 160. The tenant type can indicate whether the tenant is a paying tenant or one that has a trial account. It can also indicate the level of services that have been purchased by the requesting tenant, or that are licensed to the requesting tenant. In addition, tenant type identifier 124 can provide an indication of the number of seats 162 that are licensed to the requesting tenant and the number of active users 164 for the requesting tenant. It can include a variety of other identifiers identifying the particular type of tenant as well.

Inbound traffic monitor 126 and outbound traffic monitor 128 can provide information indicative of the number of tenants that are currently requesting changes. This is indicated by block 166. It can identify the units of inbound and outbound traffic 168 (such as the number of change requests that have been received, the number of changes in each change request, etc.), the types of changes that are being requested and other analysis results performed by the inbound and outbound traffic monitors 126 and 128, respectively.

The other behavior monitoring components 130 can provide other items as well. For instance, they can monitor or measure the latency between change requests made by tenants 104-106 and the write operations where the requests are actually made by change request processing system 116. The latency is indicated by block 170 in Figure 3. The other components 130 can provide historical data 172 which indicates how the latency has changed over time. This can be a rolling average, or other historical data 172. In addition, tenant behavior monitoring system 120 can provide other characteristics 174 that may be used by change scheduling component 118 to schedule the changes to be made.

Based upon the change request received by change scheduling component 118 and the behavioral characteristics and other data 142, change slicing component 132 determines whether the currently received change request needs to be sliced into sections. This is indicated by block 176 in Figure 3. This can be done with reference to a fairness policy 119. Fairness policy 119 can take a wide variety of different forms. For instance, it can be embodied as a set of rules that identify how change requests are to be sliced and scheduled under certain conditions indicated by data 142. It can be static or a dynamic policy that changes with the level of available resources, with the number of tenants being served, etc.

For example, if the currently received change request is for a large number of additions to the e-mail system of a tenant, then change slicing component 132 may determine that, if all of these changes were requested, this would overwhelm the resources of change request processing system 116 so that other requesting tenants would suffer a performance degradation in terms of latency. Therefore, change slicing component 132 may slice the change request that was just received into smaller sections 148 so that changes, for this requesting tenant, are only provided to change request processing system 116, one section at a time, interleaving change request sections from other requesting tenants. In this way, sections of changes from other requesting tenants can be provided to processing system 116, in an interleaved fashion, so that all requesting tenants are receiving fair treatment with respect to the performance of change request processing system 116 in making requested changes. In some examples, the sections for the different tenants may not be provided to processing system 116 at the same rate (such as one section for each tenant). Instead, sections may be provided preferentially for certain types of tenants. For example, two sections may be provided to processing system 116 for requesting tenants that have a paid service, for every one section provided from requesting tenants that have a trial service. These types of preferential processing can be set out in fairness policy 196 or elsewhere. Similarly, change slicing component 132 can vary the size of the sections for each requesting tenant as well, to achieve desired fairness.

If change slicing component 132 determines (based on the number of changes in the currently received request or based on other characteristics and data 142) that the request does not need to be sliced into sections, then the change request is treated as a single section. This is indicated by block 178.

However, if the change request does need to be sliced, then change slicing component 132 slices the change request into sections and stores them on a per-tenant basis, in pending change store 138. Slicing the change request into sections is indicated by block 180 in Figure 3.

Next change identifier component 134 then determines the order of the sections that are to be processed. That is, it schedules the various sections in data store 138 for processing by change request processing system 116. It does so in such a way that it distributes the processing resources of change request processing system 116 in a fair manner, over all requesting tenants. In one example, it sequentially schedules one section per tenant and repeats this scheduling process until all of the sections of changes are made for all requesting tenants. In another example, as mentioned above, it can schedule multiple sections for paying tenants and fewer sections for tenants that have a trial account. Of course, it can distinguish among tenants in other ways as well. It illustratively schedules the changes according to fairness policy 119 that can be determined by an administrator or otherwise. Scheduling the sections is indicated by block 182 in Figure 3.

Once the sections of changes are scheduled, the next change identifier component 134 selects the next section of changes to be made and identifies it to scheduler communication component 136. Scheduler communication component 136 either sends that section to change request processing system 116, or identifies it to change request processing system 116 so that system 116 can pull those change requests from pending change store 138. In either case, system 116 makes the changes corresponding to the next section for which changes are to be made. Selecting the next section and making the changes in the selected section are indicated by blocks 184 and 186 in Figure 3.

Next change identifier component 134 then determines whether there are more sections to be processed. This is indicated by block 188. If so, change slicing component 132 determines whether other tenants have, in the meantime, requested more changes. This is indicated by block 190. If not, processing simply reverts to block 184 where the next scheduled section is identified and provided to change request processing system 116.

However, if, at block 190 it is determined that one or more additional tenants have requested changes, then change slicing component 132 again receives the characteristics 142 corresponding to the requesting tenants and determines whether the requests for the newly requesting tenants need to be sliced as well. This is indicated by block 192. If not, processing reverts to block 182 where the new change request is scheduled. However, if the changes in the new change request do need to be sliced, then change slicing component 132 slices those change requests into sections and places them in pending change store 138. This is indicated by block 194 in Figure 3. Again, the newly sliced change requests are scheduled in with the already-existing change requests at block 182 and processing continues until, at block 188, it is determined that no more change requests need to be processed.

It can thus be seen that change scheduling component 118 and monitoring system 120 ensure that large tenants do not starve provisioning resources from smaller tenants. It schedules onboarding activities and other change request activities so that the performance experienced by all tenants is distributed in a fair manner. Change scheduling component 118 is extensible to cater to different business scenarios such as differentiated behaviors based on the types of tenants that are using system 102. Also, the system does not rely on the good behavior of tenants. That is, it does not rely on tenants to govern their own change requests so as not to cause a degradation in performance to other tenants. Instead, it can schedule the resources of the system so that smaller tenants are not impacted (e.g., they do not experience higher latencies) than other, larger tenants. It monitors the behavior of tenants, in real time or near real time, and it decides how many changes for a given tenant to process at a time. This enables the system to provide all tenants with a fair amount of bandwidth and other computing resources for onboarding or other change processing activities.

The present discussion has mentioned processors and servers. In one embodiment, the processors and servers include computer processors with associated memory and timing circuitry, not separately shown. They are functional parts of the systems or devices to which they belong and are activated by, and facilitate the functionality of the other components or items in those systems.

Also, a number of user interface displays have been discussed. They can take a wide variety of different forms and can have a wide variety of different user actuatable input mechanisms disposed thereon. For instance, the user actuatable input mechanisms can be text boxes, check boxes, icons, links, drop-down menus, search boxes, etc. They can also be actuated in a wide variety of different ways. For instance, they can be actuated using a point and click device (such as a track ball or mouse). They can be actuated using hardware buttons, switches, a joystick or keyboard, thumb switches or thumb pads, etc. They can also be actuated using a virtual keyboard or other virtual actuators. In addition, where the screen on which they are displayed is a touch sensitive screen, they can be actuated using touch gestures. Also, where the device that displays them has speech recognition components, they can be actuated using speech commands.

A number of data stores have also been discussed. It will be noted they can each be broken into multiple data stores. All can be local to the systems accessing them, all can be remote, or some can be local while others are remote. All of these configurations are contemplated herein.

Also, the figures show a number of blocks with functionality ascribed to each block. It will be noted that fewer blocks can be used so the functionality is performed by fewer components. Also, more blocks can be used with the functionality distributed among more components.

Figure 4 is a block diagram showing a more detailed example of a multi-tenant cloud architecture 196 (cloud 196) in which system 102 can be implemented. Figure 4 shows one example of the other cloud implementation components 122 (shown in Figure 1) in more detail.

Cloud computing provides computation, software, data access, and storage services that do not require end-user knowledge of the physical location or configuration of the system that delivers the services. In various embodiments, cloud computing delivers the services over a wide area network, such as the internet, using appropriate protocols. For instance, cloud computing providers deliver applications over a wide area network and they can be accessed through a web browser or any other computing component. Software or components of architecture 100 as well as the corresponding data, can be stored on servers at a remote location. The computing resources in a cloud computing environment can be consolidated at a remote data center location or they can be dispersed. Cloud computing infrastructures can deliver services through shared data centers, even though they appear as a single point of access for the user. Thus, the components and functions described herein can be provided from a service provider at a remote location using a cloud computing architecture. Alternatively, they can be provided from a conventional server, or they can be installed on client devices directly, or in other ways.

The description is intended to include both public cloud computing and private cloud computing. Cloud computing (both public and private) provides substantially seamless pooling of resources, as well as a reduced need to manage and configure underlying hardware infrastructure.

A public cloud is managed by a vendor and typically supports multiple consumers using the same infrastructure. Also, a public cloud, as opposed to a private cloud, can free up the end users from managing the hardware. A private cloud may be managed by the organization itself and the infrastructure is typically not shared with other organizations. The organization still maintains the hardware to some extent, such as installations and repairs, etc.

Figure 4 shows that components 122 in system 102 illustratively include virtualization system 198, infrastructure components 200, application platform components 200, and application software components 204. Infrastructure components 200 can include security components 206, hardware/software infrastructure 208, servers 210, load balancing components 212, network components 214, and it can include other components 216 as well.

Application platform components 202 can include execution runtime components 218, operating system components 220, database components 222, web server components 224, and it can include other components 226 as well. Application software components 204 illustratively include user interface components 228, application workflows 230, application logic 232, database systems 234, and it can include other items 236.

Depending on the level of multi-tenancy implemented by cloud 196, virtualization system 198 will electronically separate the physical computing device components 122 into one or more virtual devices. Each of these devices can be used and managed to perform computing tasks.

Multi-tenant cloud computing architecture 196 can provide services at a number of different levels, according to a number of different models. They can include, for instance, infrastructure as a service (IaaS), platform as a service (PaaS) and software as a service (SaaS), among others. IaaS is the most basic and each of the higher level models (PaaS and SaaS, respectively) abstract from the details of the lower models.

In IaaS, physical or virtual machines are provided, along with other resources. A supervisory component (sometimes referred to as a hypervisor) runs the virtual machines. Multiple different hypervisors can be used to run a relatively large number of virtual machines and to scale up and down according to the needs of various tenants. The IaaS model can also offer additional resources (such as other infrastructure components 200) on-demand. In order for a tenant to deploy their applications, they install operating system images as well as their application software on the cloud infrastructure components 200. The tenant is then responsible for maintaining the operating systems and application software.

PaaS involves the cloud architecture 196 providing the application platform components 202 as a service. Application developers can develop and run their software on the cloud platform components 202 without needing to manage the underlying hardware and software layers.

SaaS involves architecture 196 providing access to application software and databases in application components 204. The cloud architecture 196 manages the infrastructure components 200 and the platform components 202 that run the applications. The cloud 196 also installs and operates the application software in application components 204 and tenants access the software but do not manage the cloud infrastructure components 200 or platform components 202 where the application runs. In such an implementation, virtualization system 198 provides multiple virtual machines at runtime to meet changing workloads. Load balancers distribute the work over the virtual machines. This process is often transparent to the tenant who sees only a single access point to the application.

In a multi-tenant environment, any machine can serve more than one user organization that deploys a tenant system 104-106. Multi-tenancy, however, can apply to all three layers of cloud architecture (IaaS, PaaS and SaaS). The exact degree of multi-tenancy may be based on how much of the core application (or application components 204) is designed to be shared across tenants 104-106. A relatively high degree of multi-tenancy allows the database schema to be shared and supports customization of the business logic, workflow and user interface layers. In a relatively low degree of multi-tenancy, the IaaS and PaaS components 200 and 202, respectively, are shared by the application components 204 that have dedicated virtualized components that are dedicated to each tenant.

The discussion above has proceeded with respect to the cloud-based multi-tenant service system 102 offering software as a service. Therefore, the virtualization system 198 will provide separate virtual machines to provide each tenant 104-106 with their own, secure and separate virtual computing environment on the application software level. Thus, each tenant 104-106 can make changes to their own application (such as their own electronic mail application, document management system, business system, etc.). When done as described above with respect to Figures 1-3, they can do so without unfairly affecting the performance observed by other tenants.

It is also contemplated that some elements of system 102 can be disposed in the cloud while others are not. By way of example, the databases and data stores can be disposed outside of cloud 196, and accessed through cloud 196. In another example, other components can be outside of cloud 196. Regardless of where they are located, they can be accessed directly by devices in tenant systems 104-106, through a network 300 (either a wide area network or a local area network), they can be hosted at a remote site by a service, or they can be provided as a service through a cloud or accessed by a connection service that resides in the cloud. All of these architectures are contemplated herein.

It will also be noted that architecture 100, or portions of it, can be disposed on a wide variety of different devices. Some of those devices include servers, desktop computers, laptop computers, tablet computers, or other mobile devices, such as palm top computers, cell phones, smart phones, multimedia players, personal digital assistants, etc.

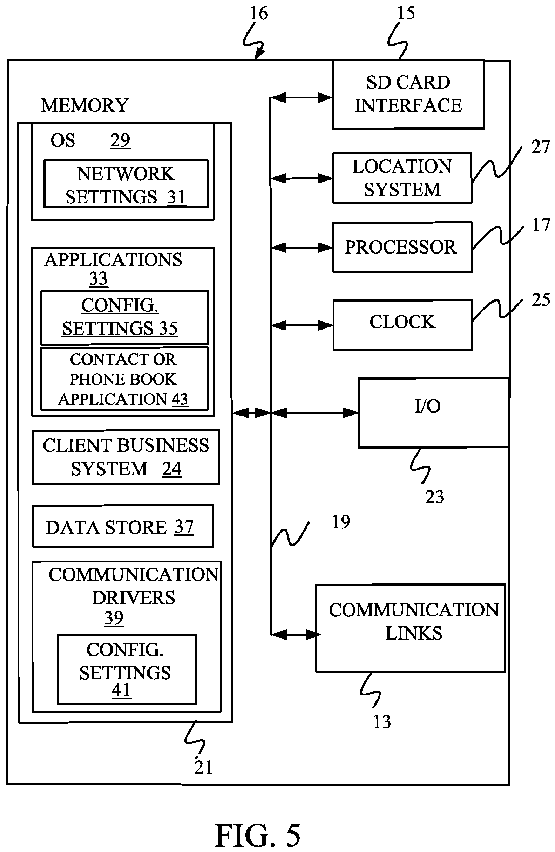

Figure 5 provides a general block diagram of the components of a client device 16 that can run components of architecture 100 or tenants 104-106 or that interacts with architecture 100, or both. In the device 16, a communications link 13 is provided that allows the handheld device to communicate with other computing devices and under some embodiments provides a channel for receiving information automatically, such as by scanning. Examples of communications link 13 include an infrared port, a serial/USB port, a cable network port such as an Ethernet port, and a wireless network port allowing communication though one or more communication protocols including General Packet Radio Service (GPRS), LTE, HSPA, HSPA+ and other 3G and 4G radio protocols, 1Xrtt, and Short Message Service, which are wireless services used to provide cellular access to a network, as well as Wi-Fi protocols, and Bluetooth protocol, which provide local wireless connections to networks.

Under other embodiments, applications or systems are received on a removable Secure Digital (SD) card that is connected to a SD card interface 15. SD card interface 15 and communication links 13 communicate with a processor 17 (which can also embody processors or servers described above in the other Figures) along a bus 19 that is also connected to memory 21 and input/output (I/O) components 23, as well as clock 25 and location system 27.

I/O components 23, in one embodiment, are provided to facilitate input and output operations. I/O components 23 for various embodiments of the device 16 can include input components such as buttons, touch sensors, multi-touch sensors, optical or video sensors, voice sensors, touch screens, proximity sensors, microphones, tilt sensors, and gravity switches and output components such as a display device, a speaker, and or a printer port. Other I/O components 23 can be used as well.

Clock 25 illustratively comprises a real time clock component that outputs a time and date. It can also, illustratively, provide timing functions for processor 17.

Location system 27 illustratively includes a component that outputs a current geographical location of device 16. This can include, for instance, a global positioning system (GPS) receiver, a LORAN system, a dead reckoning system, a cellular triangulation system, or other positioning system. It can also include, for example, mapping software or navigation software that generates desired maps, navigation routes and other geographic functions.

Memory 21 stores operating system 29, network settings 31, applications 33, application configuration settings 35, data store 37, communication drivers 39, and communication configuration settings 41. Memory 21 can include all types of tangible volatile and non-volatile computer-readable memory devices. It can also include computer storage media (described below). Memory 21 stores computer readable instructions that, when executed by processor 17, cause the processor to perform computer-implemented steps or functions according to the instructions. Similarly, device 16 can have a client business system 24 which can run various business applications or embody parts or all of tenant systems 104-106. Processor 17 can be activated by other components to facilitate their functionality as well.

Examples of the network settings 31 include things such as proxy information, Internet connection information, and mappings. Application configuration settings 35 include settings that tailor the application for a specific enterprise or user. Communication configuration settings 41 provide parameters for communicating with other computers and include items such as GPRS parameters, SMS parameters, connection user names and passwords.

Applications 33 can be applications that have previously been stored on the device 16 or applications that are installed during use, although these can be part of operating system 29, or hosted external to device 16, as well.

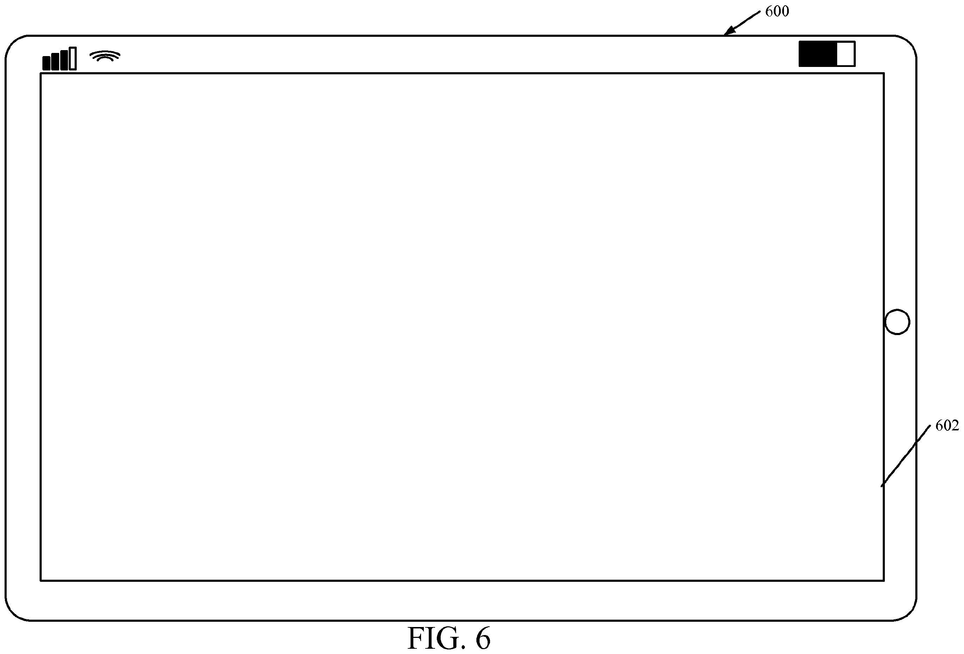

Figure 6 shows one example in which device 16 is a tablet computer 600. In Figure 6, computer 600 is shown with user interface display screen 602. Screen 602 can be a touch screen (so touch gestures from a user's finger can be used to interact with the application) or a pen-enabled interface that receives inputs from a pen or stylus. It can also use an on-screen virtual keyboard. Of course, it might also be attached to a keyboard or other user input device through a suitable attachment mechanism, such as a wireless link or USB port, for instance. Computer 600 can also illustratively receive voice inputs as well.

Additional examples of devices 16 can be used as well. They can include, a feature phone, smart phone or mobile phone. The phone can include a set of keypads for dialing phone numbers, a display capable of displaying images including application images, icons, web pages, photographs, and video, and control buttons for selecting items shown on the display. The phone can include an antenna for receiving cellular phone signals such as General Packet Radio Service (GPRS) and 1Xrtt, and Short Message Service (SMS) signals. In some embodiments, the phone also includes a Secure Digital (SD) card slot that accepts a SD card.

The mobile device can also be a personal digital assistant (PDA) or a multimedia player or a tablet computing device, etc. (hereinafter referred to as a PDA). The PDA can include an inductive screen that senses the position of a stylus (or other pointers, such as a user's finger) when the stylus is positioned over the screen. This allows the user to select, highlight, and move items on the screen as well as draw and write. The PDA can also include a number of user input keys or buttons which allow the user to scroll through menu options or other display options which are displayed on the display, and allow the user to change applications or select user input functions, without contacting the display. The PDA can include an internal antenna and an infrared transmitter/receiver that allow for wireless communication with other computers as well as connection ports that allow for hardware connections to other computing devices. Such hardware connections are typically made through a cradle that connects to the other computer through a serial or USB port. As such, these connections are non-network connections.

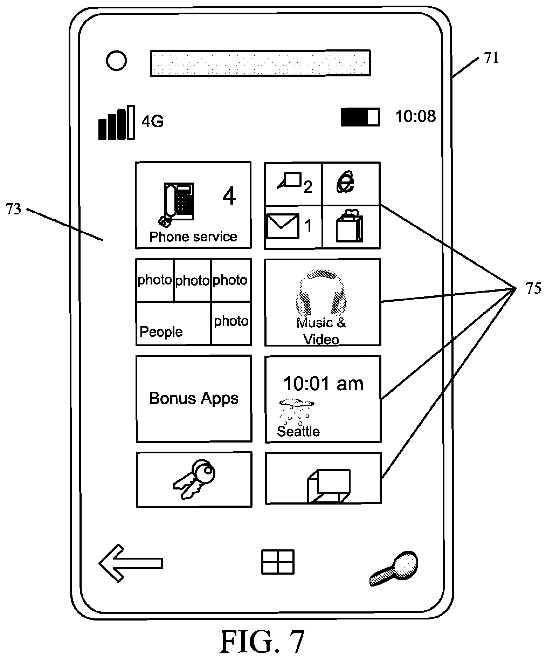

Figure 7 shows a smart phone 71. Smart phone 71 has a touch sensitive display 73 that displays icons or tiles or other user input mechanisms 75. Mechanisms 75 can be used by a user to run applications, make calls, perform data transfer operations, etc. In general, smart phone 71 is built on a mobile operating system and offers more advanced computing capability and connectivity than a feature phone.

Note that other forms of the devices 16 are possible.

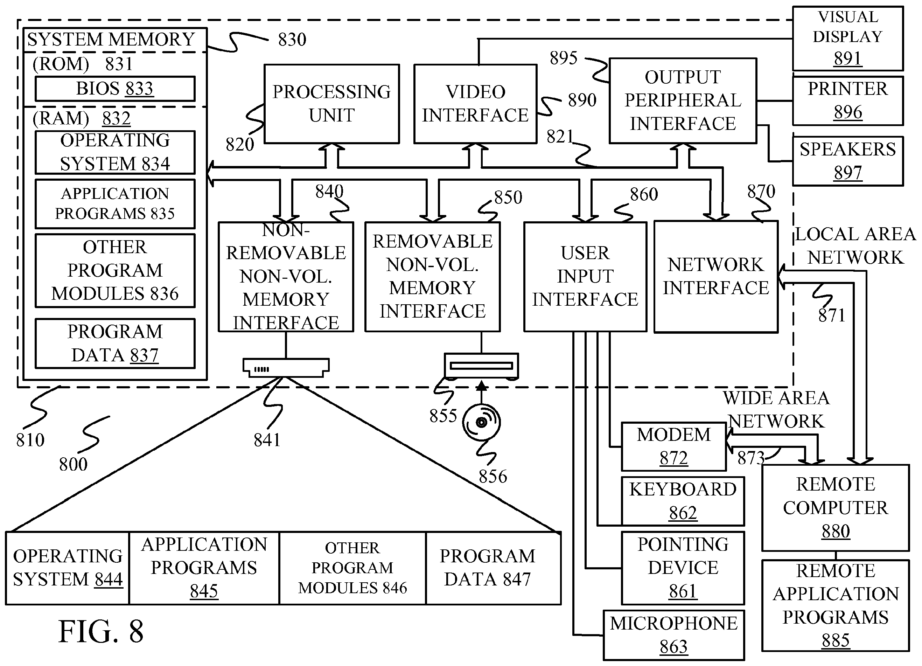

Figure 8 is one example of a computing environment in which architecture 100, or parts of it, (for example) can be deployed. With reference to Figure 8, an example system for implementing some embodiments includes a general-purpose computing device in the form of a computer 810. Components of computer 810 may include, but are not limited to, a processing unit 820 (which can comprise processors or servers discussed above), a system memory 830, and a system bus 821 that couples various system components including the system memory to the processing unit 820. The system bus 821 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus. Memory and programs described with respect to Figure 1 can be deployed in corresponding portions of Figure 8.

Computer 810 typically includes a variety of computer readable media. Computer readable media can be any available media that can be accessed by computer 810 and includes both volatile and nonvolatile media, removable and non-removable media. By way of example, and not limitation, computer readable media may comprise computer storage media and communication media. Computer storage media is different from, and does not include, a modulated data signal or carrier wave. It includes hardware storage media including both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 810. Communication media typically embodies computer readable instructions, data structures, program modules or other data in a transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer readable media.

The system memory 830 includes computer storage media in the form of volatile and/or nonvolatile memory such as read only memory (ROM) 831 and random access memory (RAM) 832. A basic input/output system 833 (BIOS), containing the basic routines that help to transfer information between elements within computer 810, such as during start-up, is typically stored in ROM 831. RAM 832 typically contains data and/or program modules that are immediately accessible to and/or presently being operated on by processing unit 820. By way of example, and not limitation, Figure 8 illustrates operating system 834, application programs 835, other program modules 836, and program data 837.

The computer 810 may also include other removable/non-removable volatile/nonvolatile computer storage media. By way of example only, Figure 8 illustrates a hard disk drive 841 that reads from or writes to non-removable, nonvolatile magnetic media, and an optical disk drive 855 that reads from or writes to a removable, nonvolatile optical disk 856 such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 841 is typically connected to the system bus 821 through a non-removable memory interface such as interface 840, and optical disk drive 855 are typically connected to the system bus 821 by a removable memory interface, such as interface 850.

Alternatively, or in addition, the functionality described herein can be performed, at least in part, by one or more hardware logic components. For example, and without limitation, illustrative types of hardware logic components that can be used include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), etc.

The drives and their associated computer storage media discussed above and illustrated in Figure 8, provide storage of computer readable instructions, data structures, program modules and other data for the computer 810. In Figure 8, for example, hard disk drive 841 is illustrated as storing operating system 844, application programs 845, other program modules 846, and program data 847. Note that these components can either be the same as or different from operating system 834, application programs 835, other program modules 836, and program data 837. Operating system 844, application programs 845, other program modules 846, and program data 847 are given different numbers here to illustrate that, at a minimum, they are different copies.

A user may enter commands and information into the computer 810 through input devices such as a keyboard 862, a microphone 863, and a pointing device 861, such as a mouse, trackball or touch pad. Other input devices (not shown) may include a joystick, game pad, satellite dish, scanner, or the like. These and other input devices are often connected to the processing unit 820 through a user input interface 860 that is coupled to the system bus, but may be connected by other interface and bus structures, such as a parallel port, game port or a universal serial bus (USB). A visual display 891 or other type of display device is also connected to the system bus 821 via an interface, such as a video interface 890. In addition to the monitor, computers may also include other peripheral output devices such as speakers 897 and printer 896, which may be connected through an output peripheral interface 895.

The computer 810 is operated in a networked environment using logical connections to one or more remote computers, such as a remote computer 880. The remote computer 880 may be a personal computer, a hand-held device, a server, a router, a network PC, a peer device or other common network node, and typically includes many or all of the elements described above relative to the computer 810. The logical connections depicted in Figure 8 include a local area network (LAN) 871 and a wide area network (WAN) 873, but may also include other networks. Such networking environments are commonplace in offices, enterprise-wide computer networks, intranets and the Internet.

When used in a LAN networking environment, the computer 810 is connected to the LAN 871 through a network interface or adapter 870. When used in a WAN networking environment, the computer 810 typically includes a modem 872 or other means for establishing communications over the WAN 873, such as the Internet. The modem 872, which may be internal or external, may be connected to the system bus 821 via the user input interface 860, or other appropriate mechanism. In a networked environment, program modules depicted relative to the computer 810, or portions thereof, may be stored in the remote memory storage device. By way of example, and not limitation, Figure 8 illustrates remote application programs 885 as residing on remote computer 880. It will be appreciated that the network connections shown are exemplary and other means of establishing a communications link between the computers may be used.

It should also be noted that the different embodiments described herein can be combined in different ways. That is, parts of one or more embodiments can be combined with parts of one or more other embodiments. All of this is contemplated herein.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A multi-tenant computing system (102), comprising:
a tenant behavior monitoring system (120) that generates data indicative of characteristics of requesting tenants (104-106) that send corresponding change requests (112-114), each change request being indicative of requested changes to tenant data (108-110) corresponding the requesting tenant;
a change scheduling component (118) that receives change requests from a plurality of different tenants, the change scheduling component dividing the change requests into a plurality of sections (148-150) of changes and scheduling the sections of changes to be made to the corresponding tenant data based on the characteristics of the requesting tenants; and
a change request processing system (116) that makes the change requests to the tenant data as scheduled by the change scheduling component,
wherein the change scheduling component comprises a change slicing component (132) that determines whether to break each change request into a plurality of different sections for scheduling, based on performance information indicative of performance of the change request processing system in making changes for the requesting tenants.

2. The multi-tenant computing system of claim 1 wherein the change scheduling component further comprises:
a next change identifier component that schedules a next change to be made by the change request processing system based on the performance information.

3. The multi-tenant computing system of claim 2 wherein the next change slicing component and the next change identifier component determine whether to break each change request into the plurality of different sections, and schedule the next change to be made, respectively, based on a tenant fairness policy that indicates expected performance for different requesting tenants.

4. The multi-tenant computing system of claim 2 wherein the next change slicing component and the next change identifier component determine whether to break each change request into the plurality of different sections, and schedule the next change to be made, respectively, based on a measure of performance for different requesting tenants.

5. The multi-tenant computing system of claim 4 wherein the tenant behavior monitoring system comprises:
set of performance measuring components that provide the measure of performance for the different requesting tenants.

6. The multi-tenant computing system of claim 5 wherein the tenant behavior monitoring system comprises:
a traffic monitoring component that monitors and provides, as the measure of performance, a number of changes requested by each of the requesting tenants.

7. The multi-tenant computing system of claim 5 wherein the tenant behavior monitoring system comprises:
a latency monitor that monitors and provides, as the measure of performance, a latency measure indicative of a latency experienced by each of the requesting tenants between sending the change requests and having the corresponding changes to tenant data made by the change request processing system.

8. The multi-tenant computing system of claim 5 wherein the tenant behavior monitoring system comprises:
a tenant type identifier that identifies a tenant type of each requesting tenant and provides the tenant type as one of the characteristics of the requesting tenants.

9. A multi-tenant computing system (102), comprising:
a tenant change system (115) that receives change requests (112-114) from a plurality of different requesting tenants (104-106), the change requests being indicative of changes to tenant data (108-110) corresponding to the different requesting tenants; and
a scheduling component (118) that divides the change requests into groups (148-150) of changes and schedules the groups of changes, for the plurality of different requesting tenants, to distribute change processing resources across the change requests, based on a number of changes in each of the change requests,
wherein the scheduling component comprises a component (132) that determines whether to divide each change request into groups of changes based on performance information indicative of performance of the tenant change system in making changes for the requesting tenants.

10. The multi-tenant computing system of claim 9 wherein the tenant change system further comprises:
a change request processing system that includes the change processing resources that make the changes to the tenant data, in the groups of changes, as scheduled by the scheduling component.

11. The multi-tenant computing system of claim 10 wherein the tenant change system further comprises:
a tenant behavior monitoring system that monitors the numbers of changes in each of the change requests.

12. The multi-tenant computing system of claim 11 wherein the tenant behavior monitoring system comprises:
a latency monitor that monitors a latency for each tenant indicative of a time between sending a change request and having the changes in the change request made by the change request processing system.

13. The multi-tenant computing system of claim 12 wherein the tenant behavior monitoring system comprises:
a tenant identifier identifying a type of tenant corresponding to each requesting tenant.

14. A method, comprising:
monitoring performance metrics indicative of performance of a tenant change system (115) in making requested changes to tenant data (108-110), requested by requesting tenants (104-106), in a multi-tenant computing system (102) ; determining whether to divide each requested change into a plurality of sections (148-150) of changes based on the performance;
dividing the requested changes into a plurality of sections of changes;
scheduling the sections of changes to be made by allocating change request processing resources among the requesting tenants, based on the performance metrics; and
making the changes to the tenant data in each of the sections of changes, as scheduled, using the allocated change request processing resources.

## Patentansprüche

1. Mehrinstanzenfähiges Computersystem (102), umfassend:
ein Mandantenverhalten-Überwachungssystem (120), das Daten erzeugt, die Merkmale von anfordernden Mandanten (104-106) anzeigen, welche entsprechenden Änderungsanforderungen (112-114) senden, wobei jede Änderungsanforderung angeforderte Änderungen an Mandantendaten (108-110) anzeigt, die mit dem anfordernden Mandanten korrespondieren;
eine Änderungsplanungskomponente (118), die Änderungsanforderungen von einer Vielzahl von verschiedenen Mandanten empfängt, wobei die Änderungsplanungskomponente die Änderungsanfragen in eine Vielzahl von Abschnitten (148-150) von Änderungen aufteilt und die Abschnitte der vorzunehmenden Änderungen an den entsprechenden Mandantendaten basierend auf den Merkmalen der anfordernden Mandanten plant; und
ein Änderungsanforderungsverarbeitungssystem (116), welches die Änderungsanforderungen an den Mandantendaten wie von der Änderungsplanungskomponente geplant vornimmt,
wobei die Änderungsplanungskomponente eine Änderungssegmentierungskomponente (132) umfasst, die bestimmt, ob die einzelnen Änderungsanforderungen in eine Vielzahl von verschiedenen Abschnitten zur Planung aufgebrochen werden sollen, basierend auf Leistungsinformationen, welche die Leistung des Änderungsanforderungsverarbeitungssystems beim Vornehmen der Änderungen für die anfordernden Mandanten anzeigen.

2. Mehrinstanzenfähiges Computersystem nach Anspruch 1, wobei die Änderungsplanungskomponente des Weiteren umfasst:
eine Identifizierungskomponente der nächsten Änderung, die basierend auf den Leistungsinformationen eine nächste Änderung plant, die von dem Änderungsanforderungsverarbeitungssystem vorzunehmen ist.

3. Mehrinstanzenfähiges Computersystem nach Anspruch 2, wobei die Segmentierungskomponente der nächsten Änderung und die Identifizierungskomponente der nächsten Änderung bestimmen, ob die einzelnen Änderungsanforderungen jeweils in die Vielzahl von verschiedenen Abschnitten aufgebrochen werden sollen und die jeweils nächste vorzunehmende Änderung basierend auf einer Mandantenfairnessrichtlinie planen, welche die erwartete Leistung für verschiedene anfordernde Mandanten anzeigt.

4. Mehrinstanzenfähiges Computersystem nach Anspruch 2, wobei die Segmentierungskomponente der nächsten Änderung und die Identifizierungskomponente der nächsten Änderung bestimmen, ob die einzelnen Änderungsanforderungen jeweils in die Vielzahl von verschiedenen Abschnitten aufgebrochen werden sollen und die jeweils nächste vorzunehmende Änderung basierend auf einer Leistungsmessung für verschiedene anfordernde Mandanten planen.

5. Mehrinstanzenfähiges Computersystem nach Anspruch 4, wobei das Mandantenverhalten-Überwachungssystem umfasst:
einen Satz von Leistungsmessungskomponenten, welche die Leistungsmessung für die verschiedenen anfordernden Mandanten bereitstellen.

6. Mehrinstanzenfähiges Computersystem nach Anspruch 5, wobei das Mandantenverhalten-Überwachungssystem umfasst:
eine Verkehrsüberwachungskomponente, welche als die Leistungsmessung eine Anzahl von Änderungen überwacht und bereitstellt, die von jedem der anfordernden Mandanten gestellt werden.

7. Mehrinstanzenfähiges Computersystem nach Anspruch 5, wobei das Mandantenverhalten-Überwachungssystem umfasst:
einen Latenzmonitor, der als Leistungsmessung eine Latenzmessung überwacht und bereitstellt, die eine Latenz anzeigt, die von jedem der anfordernden Mandanten zwischen dem Senden der Änderungsanforderungen und dem Vornehmen der entsprechenden Änderungen an den Mandantendaten durch die Änderungsanforderungsverarbeitungssystem auftritt.

8. Mehrinstanzenfähiges Computersystem nach Anspruch 5, wobei das Mandantenverhalten-Überwachungssystem umfasst:
einen Mandantentypidentifikator, der einen Mandantentyp des jeweiligen anfordernden Mandanten identifiziert und den Mandantentyp als eines der Merkmale der anfordernden Mandanten bereitstellt.

9. Mehrinstanzenfähiges Computersystem (102), umfassend:
ein Mandantenänderungssystem (115), das Änderungsanforderungen (112-114) von einer Vielzahl von verschiedenen anfordernden Mandanten (104-106) empfängt,
wobei die Änderungsanforderungen Änderungen an Mandantendaten (108-110) anzeigen, die mit den verschiedenen anfordernden Mandanten korrespondieren; und
eine Planungskomponente (118), welche die Änderungsanforderungen in Gruppen (148-150) von Änderungen aufteilt und die Gruppen von Änderungen für die Vielzahl von verschiedenen anfordernden Mandanten plant, um die Änderungsverarbeitungsressourcen auf die Änderungsanforderungen zu verteilen, basierend auf einer Anzahl von Änderungen in den einzelnen Änderungsanforderungen,
wobei die Planungskomponente eine Komponente (132) umfasst, die bestimmt, ob die einzelnen Änderungsanforderungen in Gruppen von Änderungen aufgeteilt werden sollen, basierend auf Leistungsinformationen, welche die Leistung des Mandantenänderungssystems beim Vornehmen der Änderungen für die anfordernden Mandanten anzeigen.

10. Mehrinstanzenfähiges Computersystem nach Anspruch 9, wobei das Mandantenänderungssystem des Weiteren umfasst:
ein Änderungsanforderungsverarbeitungssystem, das die Änderungsverarbeitungsressourcen enthält, welche die Änderungen an den Mandantendaten in den Gruppen von Änderungen, wie von der Planungskomponente geplant, vornehmen.

11. Mehrinstanzenfähiges Computersystem nach Anspruch 10, wobei das Mandantenänderungssystem des Weiteren umfasst:
ein Mandantenverhalten-Überwachungssystem, welches die Anzahl der Änderungen in den einzelnen Änderungsanforderungen überwacht.

12. Mehrinstanzenfähiges Computersystem nach Anspruch 11, wobei das Mandantenverhalten-Überwachungssystem umfasst:
einen Latenzmonitor, der eine Latenz für die einzelnen Mandanten überwacht, welche eine Zeit zwischen dem Senden einer Änderungsanforderung und dem Vornehmen der Änderungen in der Änderungsanforderung durch das Änderungsanforderungsverarbeitungssystem anzeigt.

13. Mehrinstanzenfähiges Computersystem nach Anspruch 12, wobei das Mandantenverhalten-Überwachungssystem umfasst:
einen Mandantenidentifikator, der einen Mandantentyp identifiziert, der dem jeweiligen anfordernden Mandanten entspricht.

14. Verfahren, umfassend:
Überwachen von Leistungsmetrik, welche die Leistung eines Mandantenänderungssystems (115) beim Vornehmen von angeforderten Änderungen an Mandantendaten (108-110) anzeigt, die von anfordernden Mandanten (104-106) in einem mehrinstanzenfähigen Computersystem (102) angefordert werden;
Bestimmen, ob jede angeforderte Änderung in eine Vielzahl von Abschnitten (148-150) von Änderungen aufgeteilt werden soll, basierend auf der Leistung;
Aufteilen der angeforderten Änderungen in eine Vielzahl von Abschnitten von Änderungen;
Planen der Abschnitte von vorzunehmenden Änderungen durch Zuweisen von Änderungsanforderungsverarbeitungsressourcen unter den anfordernden Mandanten basierend auf der Leistungsmetrik; und
Vornehmen der Änderungen an den Mandantendaten in jedem aus den Abschnitten von Änderungen, wie geplant, unter Verwendung der zugewiesenen Änderungsanforderungsverarbeitungsressourcen.

## Revendications

1. Système informatique partagé (102) comprenant :
un système de surveillance de comportement des locataires (120) qui génère des données indicatives de caractéristiques de locataires requérants (104 à 106) qui envoient des demandes de changement (112 à 114) correspondantes, chaque demande de changement étant indicative de changements demandés sur des données de locataires (108 à 110) correspondant au locataire requérant,
un composant de programmation de changements (118) qui reçoit des demandes de changement en provenance d'une pluralité de locataires différents, le composant de programmation de changements divisant les demandes de changement en une pluralité de sections (148 à 150) de changements et programmant les sections de changements à réaliser sur les données correspondantes de locataires sur la base des caractéristiques des locataires requérants, et
un système de traitement de demandes de changement (116) qui réalise les demandes de changement sur les données de locataires tels qu'elles sont programmées par le composant de programmation de changements,
dans lequel le composant de programmation de changements comprend un composant de découpe des changements (132) qui détermine s'il faut couper chaque demande de changement en une pluralité de sections différentes en vue d'une programmation, sur la base d'informations de performances indicatives des performances du système de traitement des demandes de changement quant à la réalisation des changements pour les locataires requérants.

2. Système informatique partagé selon la revendication 1, dans lequel le composant de programmation de changements comprend en outre :
un composant d'identification de changement suivant qui programme le changement suivant à réaliser par le système de traitement de demandes de changement sur la base des informations de performances.

3. Système informatique partagé selon la revendication 2, dans lequel le composant de découpe de changement suivant et le composant d'identification de changement suivant déterminent s'il faut couper chaque demande de changement en cette pluralité de sections différentes, et ils programment respectivement le changement suivant à réaliser sur la base d'une politique d'équité pour les locataires qui indique les performances attendues pour différents locataires requérants.

4. Système informatique partagé selon la revendication 2, dans lequel le composant de découpe de changement suivant et le composant d'identification de changement suivant déterminent s'il faut couper chaque demande de changement en cette pluralité de sections différentes, et ils programment respectivement le changement suivant à réaliser sur la base d'une mesure des performances pour différents locataires requérants.

5. Système informatique partagé selon la revendication 4, dans lequel le système de surveillance de comportement des locataires comprend :
un ensemble de composants de mesure des performances qui procurent la mesure des performances pour les différents locataires requérants.

6. Système informatique partagé selon la revendication 5, dans lequel le système de surveillance de comportement des locataires comprend :
un composant de surveillance de trafic qui surveille et procure, en tant que mesure des performances, un nombre de changements demandés par chacun des locataires requérants.

7. Système informatique partagé selon la revendication 5, dans lequel le système de surveillance de comportement des locataires comprend :
un moniteur de latence qui surveille et procure, en tant que mesure des performances, une mesure de latence indicative d'une latence rencontrée par chacun des locataires requérants entre l'envoi des demandes de changement et la récupération des changements correspondants sur des données de locataires réalisés par le système de traitement de demandes de changement.

8. Système informatique partagé selon la revendication 5, dans lequel le système de surveillance de comportement des locataires comprend :
un identificateur de type de locataire qui identifie un type de locataire pour chacun des locataires requérants et qui procure le type de locataire comme l'une des caractéristiques des locataires requérants.

9. Système informatique partagé (102) comprenant :
un système de changement de locataires (115) qui reçoit des demandes de changement (112 à 114) provenant d'une pluralité de locataires requérants (104 à 106) différents,
les demandes de changement étant indicatives des changements sur des données de locataires (108 à 110) correspondant aux différents locataires requérants, et
un composant de programmation (118) qui divise les demandes de changement en groupes (148 à 150) de changements, et programme les groupes de changements pour la pluralité de différents locataires requérants, afin de répartir des ressources de traitement des changements sur toutes les demandes de changement, sur la base du nombre de changements dans chacune des demandes de changement,
dans lequel le composant de programmation comprend un composant (132) qui détermine s'il faut diviser chaque demande de changement en groupes de changements sur la base d'informations de performances indicatives des performances du système de changement de locataires quant à la réalisation des changements pour les locataires requérants.

10. Système informatique partagé selon la revendication 9, dans lequel le système de changement de locataires comprend en outre :
un système de traitement des demandes de changement qui inclut les ressources de traitement de changements qui réalisent les changements sur les données de locataires, dans les groupes de changements, tels qu'ils sont programmés par le composant de programmation.

11. Système informatique partagé selon la revendication 10, dans lequel le système de changement de locataires comprend en outre :
un système de surveillance de comportement des locataires qui surveille le nombre de changements dans chacune des demandes de changement.

12. Système informatique partagé selon la revendication 11, dans lequel le système de surveillance de comportement des locataires comprend :
un moniteur de latence qui surveille une latence pour chaque locataire indicative d'une durée comprise entre l'envoi d'une demande de changement et l'obtention des changements dans la demande de changement effectuée par le système de traitement des demandes de changement.

13. Système informatique partagé selon la revendication 12, dans lequel le système de surveillance de comportement des locataires comprend :
un identificateur de locataire identifiant un type de locataire correspondant à chaque locataire requérant.

14. Procédé comprenant :
la surveillance de mesures de performances indicatives des performances d'un système de changement de locataires (115) lors de la réalisation de changements demandés sur des données de locataires (108 à 110), demandés par des locataires requérants (104 à 106) dans un système informatique partagé (102),
la détermination de ce qu'il faut diviser chaque changement demandé en une pluralité de sections (148 à 150) de changements sur la base des performances,
la division des changements demandés en une pluralité de sections de changements,
la programmation des sections de changements à réaliser en allouant des ressources de traitement de demandes de changement entre les locataires requérants sur la base des mesures de performances, et
la réalisation des changements sur les données de locataires dans chacune des sections de changements, tels qu'ils sont programmés, en utilisant les ressources allouées de traitement des demandes de changement.
